# EUROPÄISCHE PATENTSCHRIFT

(11) **EP 2 657 490 B1**
(45) Veröffentlichungstag und Bekanntmachung des Hinweises auf die Patenterteilung: **03.04.2019**
(21) Anmeldenummer: 12165111.1
(22) Anmeldetag: 23.04.2012
(51) Int. Cl.: F02D 41/00, F02D 13/02, F02D 41/30, F02M 26/00

(54) **Verfahren zum Betreiben einer fremdgezündeten Brennkraftmaschine mit mindestens zwei Zylindern**
Method for operating an externally ignited combustion engine with at least two cylinders
Procédé de fonctionnement d'un moteur à combustion à allumage commandé avec au moins deux cylindres

(43) Veröffentlichungstag der Anmeldung: 30.10.2013
(73) Patentinhaber: Ford Global Technologies, LLC, Dearborn, MI 48126 (US)
(72) Erfinder: Breuer, Albert, 50769 Köln (DE); Springer, Klaus Moritz, 58095 Hagen (DE)
(74) Vertreter: Illing, Rolf

(56) Entgegenhaltungen:
- EP-A1- 1 403 490
- EP-A1- 2 116 705
- EP-A1- 2 418 372
- FR-A1- 2 916 241
- US-A1- 2005 022 755
- US-A1- 2005 217 648

## Beschreibung

Die Erfindung betrifft ein Verfahren zum Betreiben einer fremdgezündeten Brennkraftmaschine mit mindestens zwei Zylindern, bei der
- jeder Zylinder mindestens eine Auslaßöffnung zum Abführen der Abgase aus dem Zylinder via Abgasabführsystem aufweist,
- sich an jede Auslaßöffnung eine Abgasleitung anschließt, und
- die Abgasleitungen von mindestens zwei Zylindern unter Ausbildung eines Abgaskrümmers zu einer gemeinsamen Abgasleitung zusammenführen.

Eine Brennkraftmaschine der genannten Art wird als Antrieb für Kraftfahrzeuge eingesetzt. Im Rahmen der vorliegenden Erfindung umfaßt der Begriff Brennkraftmaschine Ottomotoren, die mit einer Fremdzündung ausgestattet sind, wie zum Beispiel im Dokument US 2004/0065279 A1 offenbart.

Brennkraftmaschinen verfügen über mindestens einen Zylinderkopf und einen Zylinderblock, die zur Ausbildung der einzelnen Zylinder, d. h. Brennräume, an ihren Montage-Stirnseiten miteinander verbunden werden.

Der Zylinderkopf dient häufig zur Aufnahme des Ventiltriebs. Um den Ladungswechsel zu steuern, benötigt eine Brennkraftmaschine Steuerorgane und Betätigungseinrichtungen zur Betätigung der Steuerorgane. Im Rahmen des Ladungswechsels erfolgt das Ausschieben der Verbrennungsgase über die Auslaßöffnungen und das Füllen des Brennraums, d. h. das Ansaugen des Frischgemisches bzw. der Frischluft, über die Einlaßöffnungen. Zur Steuerung des Ladungswechsels werden bei Viertaktmotoren nahezu ausschließlich Hubventile als Steuerorgane verwendet, die während des Betriebs der Brennkraftmaschine eine oszillierende Hubbewegung ausführen und auf diese Weise die Einlaß- und Auslaßöffnungen freigeben und verschließen. Der für die Bewegung der Ventile erforderliche Ventilbetätigungsmechanismus einschließlich der Ventile selbst wird als Ventiltrieb bezeichnet. Eine Ventilbetätigungseinrichtung umfaßt häufig eine Nockenwelle, auf der eine Vielzahl von Nocken angeordnet ist.

Es ist die Aufgabe des Ventiltriebes die Einlaß- und Auslaßöffnungen der Zylinder rechtzeitig freizugeben bzw. zu verschließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Zylinders mit Frischgemisch bzw. ein effektives, d. h. vollständiges Abführen der Abgase zu gewährleisten.

Die mindestens zwei Zylinder der Brennkraftmaschine, die Gegenstand der vorliegenden Erfindung ist, weisen mindestens eine Auslaßöffnung zum Abführen der Abgase auf. Die Abgasleitungen von mindestens zwei Zylindern werden unter Ausbildung eines Abgaskrümmers zusammengeführt. Stromabwärts des Krümmers werden die Abgase dann gegebenenfalls der Turbine eines Abgasturboladers und/oder einem oder mehreren Abgasnachbehandlungssystemen zugeführt.

Die Laststeuerung bei einem Ottomotor erfolgt in der Regel mittels einer im Ansaugtrakt vorgesehenen Drosselklappe. Durch Verstellen der Drosselklappe kann der Druck der angesaugten Luft hinter der Drosselklappe mehr oder weniger stark reduziert werden. Bei konstantem Brennraumvolumen kann auf diese Weise über den Druck der angesaugten Luft die Luftmasse, d. h. die Quantität, eingestellt werden. Niedrige Lasten erfordern eine stärkere Drosselung, d. h. umfängliche Druckabsenkung im Ansaugtrakt, weshalb insbesondere im Teillastbereich große Ladungswechselverluste hinzunehmen sind. Insofern weist das Kraftstoff-Luft-Gemisch im Zylinder bei niedrigen Lasten eine geringere Dichte auf als bei höheren Lasten.

Die lastabhängige Variation der Dichte kann bei der Einleitung der Fremdzündung, beispielweise mittels Zündkerze, Probleme bereiten. Um eine sichere Entzündung des Kraftstoff-Luft-Gemisches bei niedrigen Lasten, d. h. bei weniger dichtem Gemisch, zu gewährleisten, müssen die Elektroden der Zündkerze einen vergleichsweise großen Abstand aufweisen, um eine große Zündstrecke für den Zündfunken auszubilden, d. h. bereitzustellen. Ein großer Elektrodenabstand erfordert eine hohe Zündspannung.

Wird dann das Kraftstoff-Luft-Gemisch zu hohen Lasten hin dichter, wird der Spannungsbedarf, um eine sichere Zündung einzuleiten, zusätzlich erhöht, da das zwischen den Elektroden befindliche Kraftstoff-Luft-Gemisch höherer Dichte eine isolierende Wirkung betreffend den Übertritt des Zündfunkens von der einen Elektrode auf die andere Elektrode hat.

Die hohe erforderliche Zündspannung kann die Zündkerze selbst und/oder andere Bauteile, insbesondere Hochspannung führende Bauteile der Stromversorgung, d. h. des Bordnetzes des Kraftfahrzeuges, schädigen. Bei zu hohem Zündspannungsbedarf können Funkenüberschläge zwischen den Hochspannungsleitungen und der Masse auftreten. Die Ausbildung eines Zündfunkens zwischen den Elektroden unterbleibt. Es kommt zu einer Fehlzündung.

Neben der Dichte des Gemisches hat auch das Luftverhältnis *λ* Einfluß auf die Einleitung der Fremdzündung, insbesondere aber Einfluß auf die mittels Zündfunken induzierte Verbrennung.

In Abhängigkeit von der momentan vorliegenden Last *T* kann das Kraftstoff-Luft-Gemisch eines Ottomotors angefettet bzw. abgemagert werden, wobei vorzugsweise zu hohen Lasten hin eine Anfettung vorgenommen wird, d. h. das Luftverhältnis *λ* wird verringert.

Häufig erfolgt eine Anfettung (*λ* < 1) immer dann, wenn mit hohen Abgastemperaturen zu rechnen ist, d. h. bei hohen Lasten, um eine thermische Überlastung einzelner Komponenten der Brennkraftmaschine zu vermeiden. Dabei wird mehr Kraftstoff eingespritzt als mit der bereitgestellten Luftmenge verbrannt werden kann, wobei der überschüssige Kraftstoff ebenfalls erwärmt und verdampft wird, so dass die Temperatur der Verbrennungsgase sinkt. Diese Vorgehensweise ist unter energetischen Aspekten, insbesondere hinsichtlich des Kraftstoffverbrauchs der Brennkraftmaschine, und hinsichtlich der Schadstoffemissionen als nachteilig anzusehen, aber zulässig und als zielführend anerkannt.

Wird das Kraftstoff-Luft-Gemisch zu hohen Lasten hin angefettet, erhöht dies ebenfalls den Zündspannungsbedarf, da eine Anfettung die isolierende Wirkung des zwischen den Elektroden befindlichen dichten Kraftstoff-Luft-Gemisches verstärkt.

Wird das Kraftstoff-Luft-Gemisch hingegen verdünnt, beispielsweise infolge Abmagerung (*λ* > 1), ist es - wie bei einem Kraftstoff-Luft-Gemisch geringer Dichte - vorteilhaft, wenn die Elektroden der Zündkerze einen vergleichsweise großen Abstand aufweisen, um eine sichere Entzündung des verdünnten Gemisches zu gewährleisten.

Die Abmagerung des Kraftstoff-Luft-Gemisches hin zu niedrigen Lasten ist eine Maßnahme zur Entdrosselung der Brennkraftmaschine, wobei weniger Kraftstoff eingespritzt wird als mit der bereitgestellten Luftmenge verbrannt werden könnte, d. h. es wird mehr Frischluft in die Zylinder eingeleitet als zur Verbrennung des eingebrachten Kraftstoffes erforderlich ist, wodurch eine Verdünnung des Gemisches erfolgt.

Vor dem Hintergrund des Gesagten ist es die Aufgabe der vorliegenden Erfindung, ein Verfahren gemäß dem Oberbegriff des Anspruchs 1 aufzuzeigen, mit dem die aus dem Stand der Technik bekannten Nachteile überwunden werden und mit dem insbesondere die Problematik betreffend die Fremdzündung bzw. die Einleitung der Fremdzündung eliminiert wird.

Gelöst wird diese Aufgabe durch ein Verfahren gemäß Anspruch 1.

Bei dem erfindungsgemäßen Verfahren wird den unterschiedlichen lastspezifischen Anforderungen an die Zündkerze dadurch Rechnung getragen, dass - in Abhängigkeit von der Last *T* - die Zündung des Kraftstoff-Luft-Gemisches entweder mittels Fremdzündung oder aber mittels Selbstzündung eingeleitet wird.

Vorteilhaft ist es, das erfindungsgemäße Verfahren bei hohen Lasten *T* durchzuführen. Dann kann grundsätzlich eine zur Einleitung der Fremdzündung dienende Zündkerze mit einem großen Elektrodenabstand ausgebildet werden, der die sichere Entzündung eines weniger dichten Kraftstoff-Luft-Gemisches bei niedrigen Lasten gewährleistet.

Zu hohen Lasten hin, bei denen ein dichteres Kraftstoff-Luft-Gemisch mittels Fremdzündung aufgrund des großen Elektrodenabstandes nur mit sehr hohen Zündspannungen entzündbar ist, geht man erfindungsgemäß zu einem Selbstzündverfahren über bzw. nimmt ein solches Selbstzündverfahren ergänzend hinzu, um eine sichere Entzündung des Gemisches zu realisieren. Dabei wird das Kraftstoff-Luft-Gemisch in einem Zylinder mittels Abgas eines anderen Zylinders, das als Zündgas dient, gezündet.

Der das Zündgas liefernde Zylinder wird im Rahmen der vorliegenden Erfindung als erster abgasliefernder Zylinder bezeichnet, wohingegen der Zylinder, der das als Zündgas dienende Abgas erhält, als zweiter abgasempfangender Zylinder bezeichnet wird. Jeder der mindestens zwei Zylinder der Brennkraftmaschine kann sowohl als abgasliefernder Zylinder als auch als abgasempfangender Zylinder fungieren und tut dies auch; in der Regel im Wechsel, d. h. abwechselnd.

Erfindungsgemäß wird Abgas des ersten Zylinders via Abgasabführsystem und der mindestens einen Auslaßöffnung des zweiten Zylinders in diesen zweiten Zylinder eingeleitet. Dieses Abgas ist heißer als mittels Abgasrückführung rückgeführtes Abgas, insbesondere auch heißer als mittels interner Abgasrückführung rückgeführtes Abgas, welches definitionsgemäß aus dem Zylinder stammt, in den es intern wieder zurückgeführt wird. Dieser Umstand ist im Hinblick auf die Tatsache, dass das Abgas vorliegend als Zündgas zur Einleitung einer Selbstzündung verwendet wird, von besonderer Bedeutung und besonders vorteilhaft, da die Temperatur eine maßgebliche Einflußgröße im Hinblick auf die Einleitung der Selbstzündung ist. Je höher die Temperatur des Zündgases ist desto sicherer erfolgt die Einleitung einer Selbstzündung.

Wird das erfindungsgemäße Verfahren - wie oben erwähnt - bei hohen Lasten *T* durchgeführt, unterstützt dies ebenfalls die Einleitung der Selbstzündung mittels heißer Abgase. Einerseits ist das aus dem ersten Zylinder stammende Zündgas bei höheren Lasten heißer als bei niedrigen Lasten. Andererseits schafft das grundsätzlich hohe bzw. höhere Druck- und Temperaturniveau bei hohen Lasten gute Voraussetzungen für die Einleitung einer Selbstzündung im zweiten abgasempfangenden Zylinder.

Im Gegensatz hierzu eignet sich die erfindungsgemäße Selbstzündung nicht für niedrige Lasten, da die Selbstzündung unkontrolliert einsetzen oder ganz ausbleiben kann, so dass es zu einer unvollständigen Verbrennung oder zu Zündaussetzern und erhöhten Emissionen von unverbrannten Kohlenwasserstoffen und Kohlenmonoxid kommen kann. Folglich ist es vorteilhaft, bei niedrigen Lasten eine Fremdzündung anzuwenden.

Anders als bei dem aus dem Stand der Technik bekannten HCCI-Verfahren (Homogenous-Charge Compression-Ignition), das auch als Raumzündverfahren oder als CAI-Verfahren (Controlled Auto-Ignition) bezeichnet wird und bei dem eine kontrollierte Selbstzündung des homogenisierten Kraftstoff-Luft-Gemisches vorzugsweise gleichzeitig im gesamten Zylinder bzw. Brennraum angestrebt wird, wird bei dem erfindungsgemäßen Verfahren mittels einer begrenzten Menge heißen Abgases, dem Zündgas, wie mit einer Zündkerze und anstelle der Zündkerze lokal begrenzt die Selbstzündung eingeleitet. Dadurch werden Maximaldruck und Druckgradient der Verbrennung im Vergleich zur homogenen Selbstzündung begrenzt und die Kompressionszündung wird für höhere Lasten realisierbar. Vorliegend ist davon auszugehen, dass sich das aus dem abgasliefernden Zylinder stammende Zündgas nicht mit dem im abgasempfangenden Zylinder befindlichen Kraftstoff-Luft-Gemisch vollständig mischt, sondern lokal die Selbstzündung einleitet und als Ausgangspunkt für die Verbrennung des Gemisches anzusehen ist.

Die Einleitung der Selbstzündung bei hohen Lasten macht die Fremdzündung bei diesen Lasten entbehrlich, weshalb die Problematik der hochlastspezifischen Anforderungen an die Zündkerze entfällt, insbesondere das Erfordernis einer hohen Zündspannung bei hohen Lasten, bei denen erfindungsgemäß mittels Selbstzündung gezündet wird.

Darüber hinaus weist das aus der Selbstzündung stammende Abgas eine vergleichsweise geringe Konzentration an Stickoxiden (*NOₓ*) und nahezu keinen Ruß auf, was sich vorteilhaft auf das Emissionsverhalten der Brennkraftmaschine auswirkt.

Mit dem erfindungsgemäßen Verfahren wird die der Erfindung zugrunde liegende Aufgabe gelöst, nämlich ein Verfahren aufgezeigt, mit dem die aus dem Stand der Technik bekannten Nachteile überwunden werden und mit dem insbesondere die Problematik betreffend die Fremdzündung bzw. die Einleitung der Fremdzündung eliminiert wird.

Im Zusammenhang mit dem erfindungsgemäßen Verfahren, insbesondere dem Transfer von Abgas aus einem Zylinder der Brennkraftmaschine via Abgasabführsystem in einen anderen Zylinder, muß berücksichtigt werden, dass sich die Zylinder der Brennkraftmaschine beim Ladungswechsel in vielfältiger Weise gegenseitig beeinflussen können.

Diese Effekte sind bekannt und werden grundsätzlich als nachteilig angesehen. Insbesondere kann aufgrund kurzer Abgasleitungen der durch eine ablaufende Restgasausspülung erzielte Effekt zumindest teilweise durch den Ladungswechsel eines anderen Zylinders zunichte gemacht werden. So kann bei einem Vier-Zylinder-Reihenmotor, dessen Zylinder mit der Zündfolge 1 - 3 - 4 - 2 betrieben werden, beispielsweise der vierte Zylinder den in der Zündfolge vorangehenden dritten Zylinder, d. h. den vorher gezündeten Zylinder, während des Ladungswechsels nachteilig beeinflussen und aus dem vierten Zylinder stammendes Abgas in den dritten Zylinder gelangen, bevor dessen Auslaßventile schließen. Die Evakuierung der Verbrennungsgase aus dem vierten Zylinder beruht dabei im Wesentlichen auf zwei unterschiedlichen Mechanismen. Wenn sich zu Beginn des Ladungswechsels ein Auslaßventil öffnet, strömen die Verbrennungsgase aufgrund des gegen Ende der Verbrennung im Zylinder vorherrschenden hohen Druckniveaus und der damit verbundenen hohen Druckdifferenz zwischen Brennraum und Abgasabführsystem mit hoher Geschwindigkeit durch die Auslaßöffnung in die Abgasleitung. Dieser druckgetriebene Strömungsvorgang ist um so stärker je höher die Last *T* ist und wird durch eine hohe Druckspitze begleitet, die auch als Vorauslaßstoß bezeichnet wird und sich entlang der Abgasleitung fortpflanzt. Im weiteren Verlauf des Ladungswechsels gleichen sich die Drücke im Zylinder und in der Abgasleitung weitgehend an, so dass die Verbrennungsgase nun infolge der Kolbenbewegung ausgeschoben werden.

Die aus dem vierten Zylinder stammenden und in den dritten Zylinder eingeleiteten Abgase werden nach dem Stand der Technik als nachteilig angesehen. Um dieser Problematik entgegen zu treten, wird nach dem Stand der Technik die Öffnungsdauer der Auslaßventile bzw. Auslaßöffnungen verkürzt, d. h. der Auslaß später geöffnet oder früher geschlossen. Aufgrund der verkürzten Öffnungsdauer der Auslaßventile ergeben sich aber Nachteile hinsichtlich der Leistung bei hohen Drehzahlen und der Reduzierung der Pumparbeit im Teillastbetrieb zur Verringerung des Kraftstoffverbrauchs. Andere aus dem Stand der Technik bekannte Konzepte zur Vermeidung der gegenseitigen Einflußnahme leiten die Abgasströme gruppenweise voneinander getrennt einer zweiflutigen Turbine zu oder trennen die Abgasströme durch geeignete Ausbildung des Abgasabführsystems mittels Trennwänden für eine mehr oder weniger lange Wegstrecke voneinander.

Dass das erfindungsgemäße Verfahren die Überleitung von Abgas aus einem Zylinder in einen anderen Zylinder nicht verhindert, sondern zuläßt, sogar gezielt herbeiführt und sich zunutze macht, nämlich als vorteilhaftes Mittel zur Einleitung einer Selbstzündung, muß insofern als Überwindung eines technischen Vorurteils angesehen werden.

Weitere vorteilhafte Ausführungsformen des erfindungsgemäßen Verfahrens werden gemäß den Unteransprüchen beschrieben.

Vorteilhaft sind Ausführungsformen des Verfahrens, bei denen das Verfahren bei hohen Lasten *T* mit *T* > *0.5 Tₘₐₓ* durchgeführt wird, wobei *Tₘₐₓ* die maximale Last bei der jeweils vorliegenden Drehzahl *n* bezeichnet.

Vorteilhaft sind Ausführungsformen des Verfahrens, bei denen das Verfahren bei hohen Lasten *T* mit *T* > *0.65 Tₘₐₓ* durchgeführt wird, wobei *Tₘₐₓ* die maximale Last bei der jeweils vorliegenden Drehzahl *n* bezeichnet.

Vorteilhaft sind Ausführungsformen des Verfahrens, bei denen ausgehend von einer aktivierten Selbstzündung bei Unterschreiten einer vorgebbaren Last *T_{threshold}* wieder auf Fremdzündung umgestellt wird, wozu die Maßnahmen zur Einleitung der Selbstzündung unterbleiben, so dass die Selbstzündung deaktiviert wird.

Vorteilhaft sind Ausführungsformen des Verfahrens, bei denen ausgehend von einer aktivierten Selbstzündung bei Überschreiten einer vorgebbaren Drehzahl *n_{threshold}* wieder auf Fremdzündung umgestellt wird, wozu die Maßnahmen zur Einleitung der Selbstzündung unterbleiben, so dass die Selbstzündung deaktiviert wird.

Mit zunehmender Drehzahl wird die Zeitspanne, die zur Überleitung des Abgases zur Verfügung gestellt wird, immer kürzer, so dass es problematisch werden kann, die für die Selbstzündung erforderlichen Maßnahmen in der zur Verfügung stehenden Zeit durchzuführen.

Vorteilhaft sind Ausführungsformen des Verfahrens, bei denen die Fremdzündung deaktiviert wird, sobald auf Selbstzündung umgeschaltet wird und eine Selbstzündung mittels Zündgas induziert wird. Vorteilhaft an dieser Verfahrensvariante ist, dass die bei hohen Lasten für eine Fremdzündung erforderlichen hohen Zündspannungen sicher vermieden werden. Vorliegend findet ein wirklicher Wechsel im Hinblick auf das Zündverfahren statt.

Nichtsdestotrotz kann es vorteilhaft sein, beide Zündverfahren nebeneinander zur Anwendung zu bringen, d. h. auch bei Einleitung der Selbstzündung eine Fremdzündung vorzunehmen. Falls die Selbstzündung erfolgreich eingeleitet wird, erweist sich die später vorgenommene Fremdzündung als nicht erforderlich, aber auch als nicht hinderlich. Schlägt hingegen die Einleitung der Selbstzündung ungewollt fehl, kann durch die unverändert aktivierte Fremdzündung, d. h. die Aufrechterhaltung der Fremdzündung, ein Zündaussetzer und die damit verbundenen Nachteile sicher vermieden werden.

Vorteilhaft sind daher auch Ausführungsformen des Verfahrens, bei denen die Fremdzündung auch dann aufrechterhalten wird, wenn eine Selbstzündung mittels Zündgas induziert wird.

Vorteilhaft sind Ausführungsformen des Verfahrens, bei denen jeder Zylinder zur Einleitung einer Fremdzündung mit einer Zündkerze ausgestattet wird, die als Zündvorrichtung dient.

Vorteilhaft sind Ausführungsformen des Verfahrens, bei denen der in der Zündfolge der Fremdzündung vorangehende Zylinder als erster abgasliefernder Zylinder dient, der als Zündgas dienendes Abgas liefert, und der in der Zündfolge darauffolgende Zylinder als zweiter abgasempfangender Zylinder dient, in welchen das Zündgas eingeleitet wird.

Zwei in der Zündfolge aufeinander folgende Zylinder haben den geringsten Versatz hinsichtlich ihrer Arbeitsprozesse und bieten sich daher für die Überleitung von Abgas von einem Zylinder in den anderen Zylinder an, d. h. von dem in der Zündfolge vorangehenden Zylinder in den in der Zündfolge darauffolgenden Zylinder.

Zum Betreiben einer fremdgezündeten Brennkraftmaschine mit mindestens zwei Zylindern, bei der jeder Zylinder mindestens zwei Auslaßöffnungen zum Abführen der Abgase aus dem Zylinder aufweist, werden die mindestens zwei Auslaßöffnungen jedes Zylinders während des Ladungswechsels mit unterschiedlichen Steuerzeiten betrieben.

Im Wesentlichen dient dann nur eine der mindestens zwei Auslaßöffnungen des Zylinders zur Lieferung des Zündgases.

Vorteilhaft sind dabei Ausführungsformen des Verfahrens, bei denen die Auslaßöffnung, die dem in der Zündfolge darauffolgenden Zylinder zugewandt und am nächsten ist, früher geöffnet wird, und die Auslaßöffnung, die von dem in der Zündfolge darauffolgenden Zylinder abgewandt und weiter entfernt angeordnet ist, später geöffnet wird.

Die Auslaßöffnung des abgasliefernden Zylinders, die dem in der Zündfolge darauffolgenden Zylinder zugewandt und am nächsten ist, ist die Auslaßöffnung, deren Abgas via Abgasabführsystem den kürzeren Weg zu diesem in der Zündfolge folgenden abgasempfangenden Zylinder aufweist. Insofern ist diese nächstgelegene Auslaßöffnung die im Hinblick auf die Abgasüberleitung geeignete Auslaßöffnung, deren Funktion, nämlich der Überleitung von Zündgas, sinnvoll dadurch unterstützt werden kann, dass diese Auslaßöffnung früher geöffnet wird, wodurch dem Abgastransfer mehr Zeit eingeräumt wird. Die andere Auslaßöffnung, die von dem in der Zündfolge darauffolgenden Zylinder abgewandt und weiter entfernt angeordnet ist, kann später geöffnet werden, muß aber nicht später geöffnet werden.

Aus den genannten Gründen sind auch Ausführungsformen des Verfahrens vorteilhaft, bei denen die Auslaßöffnung, die dem in der Zündfolge vorangehenden Zylinder zugewandt und am nächsten ist, später geschlossen wird, und die Auslaßöffnung, die von dem in der Zündfolge vorangehenden Zylinder abgewandt und weiter entfernt angeordnet ist, früher geschlossen wird.

Auch diese Verfahrensvariante unterstützt die Überleitung von Abgas, d. h. von Zündgas, in vorteilhafter Weise. Im Unterschied zu der zuvor beschriebenen Variante wird der Transfer von Abgas aber nicht durch geeignete Steuerzeiten der Auslaßöffnungen des abgasliefernden Zylinders, sondern vielmehr durch geeignete Steuerzeiten der Auslaßöffnungen des abgasempfangenden Zylinders unterstützt. Die erzielte Verbesserung beruht aber auf denselben Effekten, wobei eine Auslaßöffnung des abgasempfangenden Zylinders länger geöffnet bleibt, d. h. später geschlossen wird, um dem bereits im Abgasabführsystem befindlichen Zündgas mehr Zeit für den Transfer zur Verfügung zu stellen.

Vorteilhaft sind Ausführungsformen des Verfahrens, bei denen die mindestens eine Auslaßöffnung des ersten abgasliefernden Zylinders und die mindestens eine Auslaßöffnung des zweiten abgasempfangenden Zylinders während des Ladungswechsels mit unterschiedlichen Steuerzeiten betrieben werden.

Diese Ausführungsform trägt unter anderem dem Umstand Rechnung, dass es vorteilhaft sein kann, das als Zündgas dienende Abgas möglichst früh in das Abgasabführsystem einzubringen, d. h. aus dem abgasliefernden Zylinder zu entlassen, und den abgasempfangenden Zylinder auf der Auslaßseite möglichst lange geöffnet zu lassen, um dem Zündgas mehr Zeit für die Überleitung via Abgasabführsystem zur Verfügung zu stellen.

Vorteilhaft sind dabei Ausführungsformen des Verfahrens, bei denen die mindestens eine Auslaßöffnung des ersten abgasliefernden Zylinders früher geöffnet wird, wozu ein Verschieben der Öffnungszeit dieser Auslaßöffnung nach früh vorgenommen wird.

Vorteilhaft sind auch Ausführungsformen des Verfahrens, bei denen die mindestens eine Auslaßöffnung des zweiten abgasempfangenden Zylinders später geschlossen wird, wozu ein Verschieben der Schließzeit dieser Auslaßöffnung nach spät vorgenommen wird.

Vorteilhaft sind Ausführungsformen des Verfahrens, bei denen bei der Durchführung des Verfahrens die Öffnungsdauer der mindestens einen Auslaßöffnung jedes Zylinders vergrößert wird, um das Überleiten von als Zündgas dienendem Abgas zu unterstützen, d. h. zu ermöglichen bzw. zu erleichtern.

Die Öffnungsdauer einer Auslaßöffnung kann dadurch vergrößert werden, dass das dazugehörige Ventil früher geöffnet und/oder später geschlossen wird. Die Vergrößerung der Öffnungsdauer kann sowohl eine Maßnahme sein, mit der das Verfahren zur Überleitung von Zündgas überhaupt erst und in Abweichung vom normalen Betrieb der Brennkraftmaschine ermöglicht wird, d. h. ein Maßnahme, mit der das erfindungsgemäße Verfahren sozusagen gestartet und zur Anwendung gebracht wird. Die in Rede stehende Verfahrensvariante, d. h. die Vergrößerung der Öffnungsdauer, kann aber auch als Maßnahme zur Verbesserung der Überleitung von Abgas eingesetzt werden.

Durch das Vergrößern der Öffnungsdauer der Auslaßöffnungen wird erreicht, dass die Abgasausschiebetakte der einzelnen Zylinder sich im Rahmen der Ladungswechsel überschneiden bzw. stärker überschneiden. Das Überleiten von als Zündgas dienendem Abgas aus einem ersten abgasliefernden Zylinder in einen zweiten abgasempfangenden Zylinder wird in vorteilhafter Weise unterstützt.

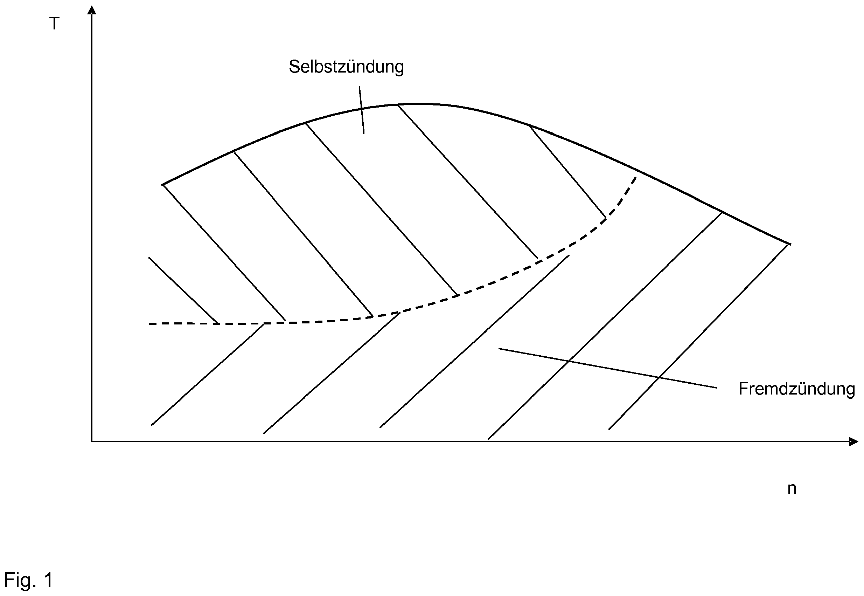

Im Folgenden wird die Erfindung anhand eines Motorkennfeldes gemäß Figur 1 näher beschrieben. Hierbei zeigt:
- Fig. 1: schematisch das Motorkennfeld einer Ausführungsform der fremdgezündeten Brennkraftmaschine, in dem die Anwendungsbereiche für die Fremdzündung und die Selbstzündung eingezeichnet sind.

Figur 1 zeigt zur Veranschaulichung des grundsätzlichen Prinzips des Verfahrens das Motorkennfeld einer Ausführungsform der fremdgezündeten Brennkraftmaschine, in dem die Anwendungsbereiche für die Fremdzündung und die Selbstzündung eingezeichnet sind.

Gemäß dem durch das Kennfeld der Figur 1 versinnbildlichten Verfahren kommt bei hohen Lasten die Selbstzündung zum Einsatz, wohingegen bei niedrigen Lasten und hin zu höheren Drehzahlen die Fremdzündung angewendet wird.

### Bezugszeichen

- *T*: Last
- *Tₘₐₓ*: maximale Last bei momentaner Drehzahl
- *T_{threshold}*: Schwellenwert für die Last, bei der die Selbstzündung wieder deaktiviert wird
- *n*: Drehzahl
- *n_{threshold}*: Schwellenwert für die Drehzahl, bei der die Selbstzündung wieder deaktiviert wird

- *λ*: Luftverhältnis

## Patentansprüche

1. Verfahren zum Betreiben einer fremdgezündeten Brennkraftmaschine mit mindestens zwei Zylindern, bei der
- jeder Zylinder mindestens zwei Auslaßöffnungen zum Abführen der Abgase aus dem Zylinder via Abgasabführsystem aufweist,
- sich an jede Auslaßöffnung eine Abgasleitung anschließt, und
- die Abgasleitungen von mindestens zwei Zylindern unter Ausbildung eines Abgaskrümmers zu einer gemeinsamen Abgasleitung zusammenführen,
**dadurch gekennzeichnet, dass**
- als Zündgas dienendes Abgas eines ersten abgasliefernden Zylinders, das während des Ladungswechsels aus dem ersten Zylinder in das Abgasabführsystem abgeführt wird, in einen zweiten abgasempfangenden Zylinder via Abgasabführsystem und der mindestens einen Auslaßöffnung dieses zweiten Zylinders eingeleitet wird, um mittels dieses Zündgases in dem zweiten Zylinder eine Selbstzündung zu induzieren, und
- die mindestens zwei Auslaßöffnungen jedes Zylinders während des Ladungswechsels mit unterschiedlichen Steuerzeiten betrieben werden.

2. Verfahren nach Anspruch 1, **dadurch gekennzeichnet, dass** das Verfahren bei hohen Lasten *T* durchgeführt wird.

3. Verfahren nach Anspruch 2, **dadurch gekennzeichnet, dass** das Verfahren bei hohen Lasten *T* mit *T* > *0.5 Tₘₐₓ* durchgeführt wird, wobei *Tₘₐₓ* die maximale Last bei der jeweils vorliegenden Drehzahl *n* bezeichnet.

4. Verfahren nach Anspruch 2 oder 3, **dadurch gekennzeichnet, dass** das Verfahren bei hohen Lasten *T* mit *T* > *0.65 Tₘₐₓ* durchgeführt wird, wobei *Tₘₐₓ* die maximale Last bei der jeweils vorliegenden Drehzahl n bezeichnet.

5. Verfahren nach einem der vorherigen Ansprüche, **dadurch gekennzeichnet, dass** die Fremdzündung deaktiviert wird, sobald auf Selbstzündung umgeschaltet wird und eine Selbstzündung mittels Zündgas induziert wird.

6. Verfahren nach einem der Ansprüche 1 bis 4, **dadurch gekennzeichnet, dass** die Fremdzündung auch dann aufrechterhalten wird, wenn eine Selbstzündung mittels Zündgas induziert wird.

7. Verfahren nach einem der vorherigen Ansprüche, **dadurch gekennzeichnet, dass** jeder Zylinder zur Einleitung einer Fremdzündung mit einer Zündkerze ausgestattet wird, die als Zündvorrichtung dient.

8. Verfahren nach einem der vorherigen Ansprüche, **dadurch gekennzeichnet, dass**
- der in der Zündfolge der Fremdzündung vorangehende Zylinder als erster abgasliefernder Zylinder dient, der als Zündgas dienendes Abgas liefert, und der in der Zündfolge darauffolgende Zylinder als zweiter abgasempfangender Zylinder dient, in welchen das Zündgas eingeleitet wird.

9. Verfahren nach einem der vorherigen Ansprüche, **dadurch gekennzeichnet, dass** die Auslaßöffnung, die dem in der Zündfolge darauffolgenden Zylinder zugewandt und am nächsten ist, früher geöffnet wird, und die Auslaßöffnung, die von dem in der Zündfolge darauffolgenden Zylinder abgewandt und weiter entfernt angeordnet ist, später geöffnet wird.

10. Verfahren nach einem der vorherigen Ansprüche, **dadurch gekennzeichnet, dass** die Auslaßöffnung, die dem in der Zündfolge vorangehenden Zylinder zugewandt und am nächsten ist, später geschlossen wird, und die Auslaßöffnung, die von dem in der Zündfolge vorangehenden Zylinder abgewandt und weiter entfernt angeordnet ist, früher geschlossen wird.

11. Verfahren nach einem der vorherigen Ansprüche, **dadurch gekennzeichnet, dass** die mindestens eine Auslaßöffnung des ersten abgasliefernden Zylinders und die mindestens eine Auslaßöffnung des zweiten abgasempfangenden Zylinders während des Ladungswechsels mit unterschiedlichen Steuerzeiten betrieben werden.

12. Verfahren nach Anspruch 11, **dadurch gekennzeichnet, dass** die mindestens eine Auslaßöffnung des ersten abgasliefernden Zylinders früher geöffnet wird, wozu ein Verschieben der Öffnungszeit dieser Auslaßöffnung nach früh vorgenommen wird.

13. Verfahren nach Anspruch 11 oder 12, **dadurch gekennzeichnet, dass** die mindestens eine Auslaßöffnung des zweiten abgasempfangenden Zylinders später geschlossen wird, wozu ein Verschieben der Schließzeit dieser Auslaßöffnung nach spät vorgenommen wird.

14. Verfahren nach einem der vorherigen Ansprüche, **dadurch gekennzeichnet, dass** bei der Durchführung des Verfahrens die Öffnungsdauer der mindestens einen Auslaßöffnung jedes Zylinders vergrößert wird, um das Überleiten von als Zündgas dienendem Abgas zu unterstützen.

## Claims

1. Method for operating an applied-ignition internal combustion engine having at least two cylinders, in which
- each cylinder has at least one outlet port for discharging the exhaust gases from the cylinder via an exhaust system,
- each outlet port is adjoined by an exhaust line, and
- the exhaust lines of at least two cylinders come together to form a common exhaust line, forming an exhaust manifold in the process,
**characterized in that**
- exhaust gas from a first, exhaust-gas-supplying cylinder, which is discharged from the first cylinder into the exhaust system during exhaust and refill, said exhaust gas serving as ignition gas, is introduced into a second, exhaust-gas-receiving cylinder via the exhaust system and the at least one outlet port of said second cylinder in order to induce autoignition in the second cylinder by means of said ignition gas, and
- the at least two outlet ports of each cylinder are operated with different timings during exhaust and refill.

2. Method according to Claim 1, **characterized in that** the method is carried out at high loads *T*.

3. Method according to Claim 2, **characterized in that** the method is carried out at high loads *T* with *T* > *0.5 Tₘₐₓ*, where *Tₘₐₓ* denotes the maximum load at the respective engine speed *n*.

4. Method according to Claim 2 or 3, **characterized in that** the method is carried out at high loads *T* with *T* > *0.65 Tₘₐₓ,* where *Tₘₐₓ* denotes the maximum load at the respective engine speed *n*.

5. Method according to one of the preceding claims, **characterized in that** applied ignition is deactivated as soon as a switch is made to autoignition and autoignition is induced by means of ignition gas.

6. Method according to one of Claims 1 to 4, **characterized in that** applied ignition is maintained even when autoignition is being induced by means of ignition gas.

7. Method according to one of the preceding claims, **characterized in that** each cylinder is fitted with a spark plug serving as an ignition device for initiating applied ignition.

8. Method according to one of the preceding claims, **characterized in that**
- the preceding cylinder in the applied ignition sequence serves as the first, exhaust-gas-supplying cylinder, which supplies exhaust gas serving as ignition gas, and the following cylinder in the ignition sequence serves as the second, exhaust-gas-receiving cylinder, into which the ignition gas is introduced.

9. Method according to one of the preceding claims, **characterized in that** the outlet port which faces and is closest to the following cylinder in the ignition sequence is opened earlier, and the outlet port which faces away and is arranged further away from the following cylinder in the ignition sequence is opened later.

10. Method according to one of the preceding claims, **characterized in that** the outlet port which faces and is closest to the preceding cylinder in the ignition sequence is closed later, and the outlet port which faces away and is arranged further away from the preceding cylinder in the ignition sequence is closed earlier.

11. Method according to one of the preceding claims, **characterized in that** the at least one outlet port of the first, exhaust-gas-supplying cylinder and the at least one outlet port of the second, exhaust-gas-receiving cylinder are operated with different timings during exhaust and refill.

12. Method according to Claim 11, **characterized in that** the at least one outlet port of the first, exhaust-gas-supplying cylinder is opened earlier, for which purpose the opening time of said outlet port is advanced.

13. Method according to Claim 11 or 12, **characterized in that** the at least one outlet port of the second, exhaust-gas-receiving cylinder is closed later, for which purpose the closing time of said outlet port is retarded.

14. Method according to one of the preceding claims, **characterized in that**, during the implementation of the method, the opening duration of the at least one outlet port of each cylinder is increased in order to assist the transfer of exhaust gas serving as ignition gas.

## Revendications

1. Procédé de fonctionnement d'un moteur à combustion interne à allumage par étincelle comprenant au moins deux cylindres, dans lequel
- chaque cylindre présente au moins deux ouvertures de sortie pour évacuer les gaz d'échappement hors du cylindre par le biais d'un système d'évacuation de gaz d'échappement,
- une conduite de gaz d'échappement se raccorde à chaque ouverture de sortie, et
- les conduites de gaz d'échappement d'au moins deux cylindres se réunissent pour former une conduite de gaz d'échappement commune en constituant un collecteur de gaz d'échappement,
**caractérisé en ce que**
- le gaz d'échappement servant de gaz d'allumage d'un premier cylindre fournissant du gaz d'échappement qui, pendant le changement de charge, est évacué hors du premier cylindre dans le système d'évacuation de gaz d'échappement, est introduit dans un deuxième cylindre recevant du gaz d'échappement par le biais du système d'évacuation de gaz d'échappement et de l'au moins une ouverture de sortie de ce deuxième cylindre afin d'induire un auto-allumage au moyen de ce gaz d'allumage dans le deuxième cylindre, et
- les au moins deux ouvertures de sortie de chaque cylindre fonctionnent avec des temps de commande différents pendant le changement de charge.

2. Procédé selon la revendication 1, **caractérisé en ce que** le procédé est mis en oeuvre à des charges élevées *T*.

3. Procédé selon la revendication 2, **caractérisé en ce que** le procédé est mis en oeuvre à des charges élevées *T* avec *T > 0,5 Tₘₐₓ, Tₘₐₓ* étant la charge maximale au régime présent respectif *n.*

4. Procédé selon la revendication 2 ou 3, **caractérisé en ce que** le procédé est mis en oeuvre à des charges élevées *T* avec *T* > *0,65 Tₘₐₓ, Tₘₐₓ* étant la charge maximale au régime présent respectif *n.*

5. Procédé selon l'une quelconque des revendications précédentes, **caractérisé en ce que** l'allumage par étincelle est désactivé dès que l'on passe en auto-allumage et un auto-allumage est induit au moyen du gaz d'allumage.

6. Procédé selon l'une quelconque des revendications 1 à 4, **caractérisé en ce que** l'allumage par étincelle est également maintenu lorsqu'un auto-allumage est induit au moyen du gaz d'allumage.

7. Procédé selon l'une quelconque des revendications précédentes, **caractérisé en ce que** chaque cylindre, pour amorcer l'allumage par étincelle, est muni d'une bougie d'allumage qui sert de dispositif d'allumage.

8. Procédé selon l'une quelconque des revendications précédentes, **caractérisé en ce que**
- le cylindre venant en premier dans la séquence d'allumage de l'allumage par étincelle sert de premier cylindre fournissant du gaz d'échappement qui fournit le gaz d'échappement servant de gaz d'allumage, et le cylindre suivant dans la séquence d'allumage sert de deuxième cylindre recevant du gaz d'échappement, dans lequel le gaz allumage est introduit.

9. Procédé selon l'une quelconque des revendications précédentes, **caractérisé en ce que** l'ouverture de sortie qui est tournée vers le cylindre suivant dans la séquence d'allumage et qui est la suivante, est ouverte plustôt et l'ouverture de sortie qui est opposée au cylindre suivant dans la séquence d'allumage et qui est disposée à une plus grande distance, est ouverte plus tard.

10. Procédé selon l'une quelconque des revendications précédentes, **caractérisé en ce que** l'ouverture de sortie qui est tournée vers le cylindre venant en premier dans la séquence d'allumage et qui est la suivante, est fermée plus tard et l'ouverture de sortie qui est opposée au cylindre venant en premier dans la séquence d'allumage et qui est disposée à une plus grande distance, est fermée plus tôt.

11. Procédé selon l'une quelconque des revendications précédentes, **caractérisé en ce que** l'au moins une ouverture de sortie du premier cylindre fournissant du gaz d'échappement et l'au moins une ouverture de sortie du deuxième cylindre recevant du gaz d'échappement fonctionnent avec des temps de commande différents pendant le changement de charge.

12. Procédé selon la revendication 11, **caractérisé en ce que** l'au moins une ouverture de sortie du premier cylindre fournissant du gaz d'échappement est ouverte plus tôt, ce pourquoi un déplacement du temps d'ouverture de cette ouverture de sortie est effectué dans le sens de l'avance.

13. Procédé selon la revendication 11 ou 12, **caractérisé en ce que** l'au moins une ouverture de sortie du deuxième cylindre recevant du gaz d'échappement est fermée plus tard, ce pourquoi un déplacement du temps de fermeture de cette ouverture de sortie est effectué dans le sens du retard.

14. Procédé selon l'une quelconque des revendications précédentes, **caractérisé en ce que** lors de la mise en oeuvre du procédé, la durée d'ouverture de l'au moins une ouverture de sortie de chaque cylindre est augmentée afin de de favoriser le transfert du gaz d'échappement servant de gaz d'allumage.
